# EUROPEAN PATENT APPLICATION

(11) **EP 1 327 690 A2**
(43) Date of publication of application: **16.07.2003**
(21) Application number: 03075100.2
(22) Date of filing: 08.01.2003
(51) Int. Cl.: C12Q 1/68, B01J 19/00, G01N 33/543

(54) **Solid phase method for analyzing a biomolecule**

(30) Priority: 11.01.2002 JP 2002004611
(71) Applicant: NISSHINBO INDUSTRIES, INC., Chuo-ku, Tokyo 103 (JP)
(72) Inventor: Kimura, Naoki, c/o Nisshinbo Industries Inc., Chiba-shi, Chiba (JP); Suzuki, Osamu, c/o Nisshinbo Industries Inc., Chiba-shi, Chiba (JP); Osumi, Masayuki, c/o Nisshinbo Industries Inc., 2-chome, Chuo-ku, Tokyo (JP)
(74) Representative: Bannerman, David Gardner

(57) **Abstract**

In a method for analyzing a biomolecule by localizing the biomolecule on a solid phase and detecting the biomolecule as a visible two-dimensional signal, the signal is detected by capturing a two-dimensional image on the solid phase with use of a scanner comprising a light source for irradiating a light on the solid phase and an image sensor for receiving a reflected light from the solid phase and capturing the two-dimensional image on the solid phase by two-dimensionally scanning the solid phase, and analyzing obtained two-dimensional image data.

## Description

### Background of the Invention

### Field of the Invention

The present invention relates to a method for analyzing a biomolecule. More precisely, the present invention relates to a technique that enables convenient and efficient detection of a biomolecule immobilized on a substrate such as a glass substrate.

### Description of the Related Art

In conventional techniques for analyzing a biomolecule such as nucleic acids and proteins using a two-dimensional signal, including electrophoresis and Southern blotting, the following two kinds of methods are mainly used as a method for detecting the biomolecule (International Patent Publication In Japanese (Kohyo) No, 10-503841, W097/10365 etc.):
(1) a method of labeling a biomolecule to be detected such as a nucleic acid with a fluorescent molecule such as polycyanine and detecting it by using a fluorescence image analyzer or the like, and
(2) a method of labeling a biomolecule to be detected such as a nucleic acid with biotin or the like, allowing an enzyme added with avidin or streptavidin to bind to the labeled biomolecule and detecting it by using a color developing substrate that can serve as a substrate of the enzyme, such as benzidine.

However, as for the method of (1) among the aforementioned methods, although it shows superior detection sensitivity, an extremely expensive fluorescence image analyzer or the like must be purchased, and in addition, it has drawbacks that, for example, the fluorescent substance is readily degraded by irradiation of light such as visible lights and ultraviolet rays. Further, although the method of (2) does not require purchase of an expensive detector, drawbacks thereof have been pointed out, for example, detection results obtained by the method are insufficient for quantitative determination, because the detection is mainly performed by visual inspection.

### Summary of the Invention

An object of the present invention is to provide a method for performing analysis of a biomolecule based on detection of a two-dimensional signal in a simple and quantitative manner.

The inventors of the present invention found that, if a two-dimensional signal of a biomolecule is detected by using an image scanner, an expensive apparatus is not needed, and the biomolecule could be quantitatively analyzed with sufficient reproducibility, and thus accomplished the present invention.

That is, the present invention provides the followings.
(1) A method for analyzing a biomolecule by localizing the biomolecule on a solid phase and detecting the biomolecule as a visible two-dimensional signal, wherein the signal is detected by capturing a two-dimensional image on the solid phase with use of a scanner comprising a light source for irradiating a light on the solid phase and an image sensor for receiving a reflected light from the solid phase and capturing the two-dimensional image on the solid phase by two-dimensionally scanning the solid phase, and analyzing obtained two-dimensional image data.
(2) The method for analyzing a biomolecule according to (1), wherein the solid phase consists of a substrate made of a material selected from the group consisting of plastics, inorganic polymers, metals, naturally occurring polymers and ceramics.
(3) The method for analyzing a biomolecule according to (1) or (2), wherein the biomolecule is selected from the group consisting of nucleic acids, proteins, enzymes, antigens, antibodies and saocharides.
(4) The method for analyzing a biomolecule according to any one of (1) to (3), wherein the solid phase on which the biomolecule is localized is a DNA chip on which DNA is immobilized.
(5) The method for analyzing a biomolecule according to any one of (1) to (4), wherein the biomolecule is visualized by binding, to the biomolecule, a labeling substance showing a transmittance. refractive index or reflectance different from that of the solid phase for a light irradiated from the light source or a substance labeled with the labeling substance and specifically binding to the biomolecule.
(6) The method for analyzing a biomolecule according to any one of (1) to (5), wherein the two-dimensional image on the solid phase is captured while a spacer is placed between a portion of the substrate where the biomolecule is not immobilized and a capturing surface of the scanner.

In the present invention, a two-dimensional signal means a signal of a biomolecule two-dimensionally separated or disposed on a solid phase. Typically, the two-dimensional signal includes a signal of an individual biomolecule localized on a solid phase and a background signal.

According to the present invention, a biomolecule can be detected with sufficient sensitivity by using an inexpensive commercially available scanner, and further, the detected image can be stored in a personal computer or the like and easily analyzed. Thus, it can be seen that the method of the present invention is a simple method showing superior cost performance.

Furthermore, since a commercially available scanner can be used, the method of the present invention can be a method for detecting a biomolecule excellent in reproducibility and quantitative determination ability. which is effective in use for DNA chips and so forth.

### Brief explanation of the Drawings

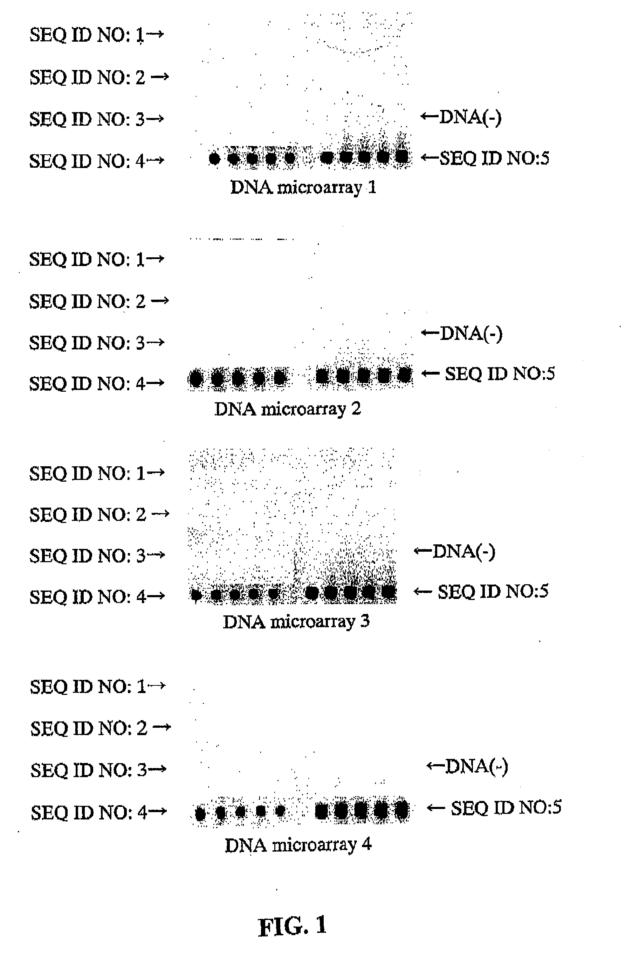

Fig. 1 shows enlarged images of areas of DNA-immobilized slide glass on which DNA was spotted.

### Preferred Embodiments of the Invention

Hereafter, the present invention will be explained in detail.

In the method of the present invention, a biomolecule is localized on a solid phase, and the biomoleoule is detected as a visible two-dimensional signal. The method used for this operation is not particularly limited, so long as a two-dimensional signal of the biomolecule can be formed on a solid phase, and various methods conventionally used for the analyses of biomolecules such as nucleic acid detection methods based on hybridization can be used. Further, even a currently unknown method may be employed, so long as it can be applied with the method of the present invention.

Hereafter, embodiments of the present invention will be explained mainly for a method of detecting a nucleic acid based on hybridization of nucleic acids using a nucleic acid immobilized on a solid phase.

### <1> Localization of biomolecule on solid phase

The solid phase used for the present invention is used for localizing a biomolecule. Examples of the biomolecule include a nucleic acid, protein, enzyme, antigen, antibody, saccharide and so forth. The nucleic acid may be, for example, a naturally occurring or synthesized DNA (including an oligodeoxyribonucleotide) or RNA (including an oligoribonucleotide). The nucleic acid may be single-stranded or double-stranded.

Localization of a biomolecule on a solid phase can be attained by separating the biomolecule in the solid phase based on a physical or chemical characteristic by means of electrophoresis or the like, or by artificially disposing the biomolecule at a determined position on the solid phase. To dispose the biomolecule on the solid phase, there can be used, for example, a method of dropping a solution containing the biomolecule on the solid phase by using a pipette, dispenser, pin or the like. Apparatuses for providing solutions in such small amounts are commercially available, and they can be used for the present invention. For example, if a spotter used for the production of DNA chips or the like is used, the biomolecule can be disposed on the solid phase at a high density. Preferred size of spots for a DNA chip is 10 µm to 10 mm.

The biomolecule localized on the solid phase may be immobilized on the solid phase by chemical or physical binding, or immobilized by gel matrix or the like.

Different kinds of biomolecules or the same kind of biomelecule may be immobilized on multiple spots on the substrate. When multiple kinds of biomolecules are immobilized on one solid phase, their configuration and so forth may be suitably selected depending on the types of biomolecules, detection method, intended use and so forth.

The biomolecule may be directly immobilized on a substrate constituting the solid phase, or immobilized via a ligand showing binding property to the biomolecule (biomolecule-immobilizing reagent).

The substrate is not particularly limited so long as it can immobilize a biomolecule and bear usual conditions for analyses of biomolecules such as hybridization. Specifically, there can be mentioned those insoluble in solvents used for immobilization and hybridization of nucleic acids etc. and being in the form of solid or gel at an ordinary temperature or within a temperature range around it (e.g., 0°C to 100°C). The expression that "a substrate is insoluble in a solvent" means that the substrate is substantially insoluble in various solvents including aqueous solvents and organic solvents used in various process steps of allowing the substrate to carry a ligand having a property of binding to a nucleic acid, such as carbodiimide group, then immobilizing the nucleic acid on the solid phase and thereafter using the substrate as a DNA chip as described later.

Specific examples of the material of such a substrate as described above include plastics, inorganic polymers, metals, naturally occurring polymers, ceramics and so forth.

Specific examples of the plastics include polyethylene, polystyrene, polycarbonate, polypropylene, polyamide, phenol resin, epoxy resin, polycarbodiimide resin, polyvinyl chloride, polyvinylidene fluoride, polyethylene fluoride, polyimide, acrylic resin and so forth.

Specific examples of the inorganic polymers include glass, carbon, silica gel, graphite and so forth.

Specific examples of the metals include gold, platinum, silver, copper, iron, aluminum, paramagnet, apatite and so forth.

Examples of the naturally occurring polymers include cellulose, chitin, chitosan, alginic acid and derivatives thereof.

Specific examples of the ceramics include alumina, silica, silicon carbide, silicon nitride, boron carbide and so forth.

Further, examples of the aforementioned biomolecule-immobilizing reagent include, for example, nitrogen yperite, poly-L-lysine, polycarbodiimide, membrane, cellulose nitrate and so forth.

Nitrogen yperite can be produced by the methods disclosed in U.S. Patent Nos. 2,141,090, 5,273,991 and 5,387,707 and so forth. Further, cellulose nitrate, poly-L-lysine and membrane can be produced by the methods disclosed in J. Sambrook, E.F. Fritsch and T. Maniatis, Molecular Cloning, Cold Spring Harbor Laboratory Press, Second Edition, pages 2.109-2.113 and pages 9.34-9.46, International Patent Publication in Japanese (Kohyo) No. 10-503841 and so forth.

In the present invention, so long as the biomolecule-immobilizing reagent can be carried on the aforementioned substrate, it may be carried by simply utilizing a physical adhesive property, or it may be chemically carried via a covalent bond or the like.

Further, the biomolecule-immobilizing reagent may be carried on the whole surface of the substrate or a part thereof, as required. Further, when a biomolecule is immobilized, it may be irradiated with an electromagnetic wave such as an ultraviolet ray.

As the aforementioned biomolecule-immobilizing reagent used for the production of a carrier comprising a substrate carrying the biomolecule-immobilizing reagent using physical adhesion, any compounds comprising the biomolecule-immobilizing reagent bound to a polymer compound can be used without any particular limitation.

Such a biomolecule-immobilizing reagent binding polymer compound shows high adhesion to the aforementioned substrate, and it is carried by the substrate by utilizing this adhesion. A typical form of the biomolecule-immobilizing reagent binding polymer compound carried on the substrate using physical adhesion is a coated film.

The method for coating the aforementioned biomolecule-immobllizing reagent binding polymer compound on the substrate as a coated film may be a known method, for example, spraying, immersing, brushing, stamping, vapor deposition, coating by using a film coater and so forth.

In the method of the present invention, the solid phase is frequently brought into contact with biomolecules other than the biomolecule immobilized on the solid phase and so forth. Therefore, in order to prevent such biomolecules other than the immobilized biomolecule and so forth from non-specifically binding to unreacted regent remaining on the substrate, active sites are preferably blocked by bringing the solid phase into contact with an excessive amount of bovine serum albumin (BSA), casein, salmon sperm DNA or the like after an objective biomolecule is immobilized on the solid phase.

### <2> Detection of the two-dimensional signal of biomolecule

The biomolecule on the solid phase is detected as a visible two-dimensional signal. Such a two-dimensional signal is conventionally detected by visual inspection or by using a fluorescence image analyzer or the like, directly or after being recorded as a photograph. On the other hand, in the present invention, a two-dimensional signal of a biomolecule is detected by capturing a two-dimensional image on the solid phase with use of a scanner, and analyzing the obtained two-dimensional image data. The aforementioned scanner is an apparatus that has a light source for irradiating the solid phase with a light and an image sensor for receiving a reflected light from the solid phase and can capture a two-dimensional image on the solid phase by two-dimensionally scanning the solid phase. As such a two-dimensional scanner, there can be mentioned an image scanner used as a peripheral equipment of a computer, and products marketed from various electrical equipment manufacturers can be used. Further, such a scanner is built in various apparatuses such as an electrophotographic apparatus (copying machine) and facsimile. If a TWAIN compliant apparatus is used as the scanner, storage and analysis of data by a personal computer become easy, and quantitative analysis also becomes possible.

A signal of the biomolecule may be directly detected by irradiating the solid phase with a light from the aforementioned light source. Further, the biomolecule may also be detected after it is visualized by binding it with a labeling substance showing a transmittance, refractive index or reflectance different from that of the solid phase for a light irradiated from the light source or a substance labeled with such a labeling substance and specifically binding to the biomolecule. The method for the visualization may be suitably selected depending on the type of the biomolecule.

For example, electrophoresis gel or a nucleic acid or protein transferred from or the gel by using a filter can be visualized by staining it with a suitable dye. Further, a particular protein can be visualized by using a protein such as an antibody labeled with a labeling substance. Similarly, a particular nucleic acid can be visualized by using a nucleic acid probe specifically binding to the nucleic acid.

Although the labeling substance itself may be visible, it may be invisible so long as it can be visualized by a color development reaction. Examples of such a labeling substance include enzymes such as alkaline phosphatase and horseradish peroxidase. It is also possible to use an antigen or antibody, or biotin or avidin or the like as a labeling substance so that an enzyme should specifically bind to the labeling substance via a linkage of antigen-antibody, biotin-avidin or the like.

Specific examples of the labeling substance include color developing substrates, photochromic compounds and so forth.

Examples of the aforementioned color developing substrates include benzidines and so forth, and color development can be obtained by using a combination of digoxigenin or the like and an enzyme or the like.

Examples of the aforementioned photochromio compounds include azobenzenes, spiropyrans, fulgides, diarylethenes, stilbenes, phenoxynaphthacenequinone, thioindigo, Malachite Green and so forth.

Since P-type photochromic compounds also take an optically steady state to show color development at the time of detection by irradiation of a light, they can also be used for the detection of a biomolecule.

Furthermore, azo dyes such as azobenzene can be colored by irradiation of an ultraviolet ray or the like before the detection and detected.

As the method of labeling a biomolecule by using such photochromic compounds, a functional group such as succinimide ester group, isothiocyanate group, carbodiimide group, isocyanate group, amino group, halogen, nitrogen yperite or thiol group can be introduced into a photochromic compound at an appropriate position not interfering the coloration of the photochromic compound and then it can be used for labeling (reaction) of a biomolecule in water or buffer.

Further, when a coloring substance or a photochromic compound is introduced into a nucleic acid, it is also possible to introduce the coloring substance or photochromic compound into an intercalator having an appropriate linker and intercalate it in the nucleic acid in water or buffer.

A two-dimensional image on the solid phase is captured in the same manner as capture of a two-dimensional image of an ordinary photograph, document or the like by using an image scanner. When the solid phase is placed on a scanning surface of the scanner, the side of the solid phase on which the biomolecule is immobilized is preferably faced the capturing surface. Further, a spacer may be inserted between a portion of the solid phase on which the biomolecule is not immobilized and the capturing surface. Even when flatness of the capturing surface or the solid phase is not sufficient, use of such a spacer prevents formation of small gaps and generation of moire (interference pattern) formed by the small gaps, and thus an image can be stably obtained. Further, the use of a spacer prevents direct contact of a portion of the solid phase on which the biomolecule is immobilized with the capturing surface, and thus it is effective for protection of the solid phase and prevention of fouling of the scanner. The spacer preferably has a thickness of about 100 to 200 µm.

The image capturing by a scanner is performed, for example, with a resolution degree of about 600 dpi. The captured two-dimensional image data are analyzed by using a computer and appropriate image analysis software. For example, the captured image data are stored as data in monochromatic 256 gradation degrees in a memory device of a computer. The data are expanded in a memory as an image and indicated on a display. Grids are automatically set by the software on the image expanded on the memory, or grids are manually set on the image indicated on the display. Then, filtering for upper or lower limits is performed to eliminate background noise, and subsequently the dot data in monochromatic 256 gradation degrees are once transformed into reflection densities and compared with grid locations to integrate them on each grid. Gamma control is performed for the obtained integrated values for normalization and conversion of them so that they have a linear signal level corresponding to the color developing characteristic and characteristics of the scanner and so forth, and the results are calculated and outputted. Based on the obtained results, locations, sizes and densities of spots or bands can be measured.

The method for detecting a biomolecule of the present invention does not require purchase of an expensive detector, and if this method is used for analysis, analysis with superior reproducibility and quantitative determination ability is enabled. The detection method of the present invention can be suitably used for a DNA chip or the like used in techniques for determining nucleotide sequences by hybridization using a large number of biomolecules, such as sequencing by hybridization (SBH) and sequencing by hybridization with oligonucleotide matrix (SHOM).

### Examples

Hereafter, the present invention will be explained more specifically with reference of the following examples.

### Preparation Example: Preparation of polycarbodiimidated slide glass

### (1) Preparation of aminated slide glass

In an amount of 20 ml of 10%(v/v) solution of 3-aminopropyltriethoxysilane in ethanol was added to 180 ml of distilled water and stirred. After 6 N HCl was added to the solution to adjust pH of the solution to 3 to 4, 15 pieces of slide glass were immersed into the solution and heated at 75°C for 2 hours. After the heating was finished, the slide glass was pulled up from the solution, and the solution was sufficiently washed down with distilled water. Then, the slide glass was subjected to a heat treatment at 115°C for 4 hours to obtain aminated slide glass. The above procedure was repeated to further obtain aminated slide glass.

### (2) Preparation of carbodiimide resin

In an amount of 12.5 g of cyclohexyl isocyanate (Tokyo Kasei Kogyo) and 1.3 g of 3-methyl-1-phenyl-2-phosphorene-1-oxide (Aldrich) were added to 117.9 g of 4,4'-dicyclohexylmethanediisocyanate (Aldrich). Then, the mixture was stirred at 185°C for 96 hours, while nitrogen was added at a flow rate of 0.5 ml/minute. After cooling, polycarbodiimide resin was obtained as powder. The average polymerization degree of the obtained polycarbodiimide resin was 10, and the number average molecular weight was about 2400.

### (3) Preparation of polycarbodiimidated slide glass

A 10% chloroform solution of the carbodiimide resin prepared in the above (2) was prepared, and 15 pieces of the aminated slide glass prepared in the above (1) were immersed in the solution and immediately pulled up. Then, the slide glass was washed twice with 200 ml of chloroform for 10 minutes, and dried at 40°C for 2 hours to obtain polycarbodiimidated slide glass. The above procedure was repeated to further obtain polycarbodiimidated slide glass.

### Example 1

### (1) Immobilization of nucleic acid

Oligonucleotides having each of the nucleotide sequences of SEQ ID NOS: 1 to 5 were prepared. The nucleotide sequence of SEQ ID NO: 4 corresponds to a partial nucleotide sequence of λ-phage DNA, and can be hybridized with the probe mentioned below. The other sequences correspond to the nucleotide sequence of SEQ ID NO: 4 of which 10th nucleotide is replaced with another nuoleotide. In addition, only the oligonucleotide of SEQ ID NO: 5 was labeled with biotin at the 5' end as a positive control. Each of these oligonucleotides was dissolved in 2 M NaCl at a concentration of 100 pmol/µl to obtain a DNA solution. The DNA solution was spotted on five predetermined positions of the polycarbodiimidated slide glass obtained in the above preparation example by using a spotter (Certesian). The slide glass was put into a dryer, dried at 37°C for 15 minutes and further irradiated with ultraviolet ray. Then, the slide glass was immersed in Buffer A (0.2 M sodium chloride, 0.1 M Tris-HCl (pH 7.5), 0.05% Triton X-100) containing 3% BSA (bovine serum albumin), and dried at 37°C for 15 minutes. Subsequently, this slide glass was washed with TE buffer (10 mM Tris-HCl, pH 7.2/1 mM EDTA) and dried at 37°C for 15 minutes. Eighteen pieces of DNA microarrays were prepared as described above.

### [Composition of Buffer A]

0.2 M NaCl
0.1 M Tris-HCl (pH 7.5)
0.05% Triton X-100

### [Composition of Buffer B]

0.1 M NaCl
0.1 M Tris-HCl (pH 9.5)

### (2) Hybridization

On the DNA-immobilized portions of the aforementioned slide glass, a hybridization solution [3 x SSC (SSC: 1.5 M NaCl, 0.15 M sodium citrate), 10% dextran, 1 pmol of biotinylated probe, 30 µl each] was placed, and heated overnight on a water bath at 42°C. The biotinylated probe was prepared by amplifying a λDNA fragment having a sequence complementary to the oligomer of SEQ ID NO: 4 through PCR using a primer labeled with biotin. The obtained fragment was subjected to agarose gel electrophoresis and detected by staining with ethidium bromide. As a result, it was found that the fragment had a length of about 100 b.

### (3) Post-Hybridization

After the hybridization, the hybridization solution was lightly absorbed from the slide glass, and the slide glass was subjected to post-hybridization washing under the following conditions to remove non-specifically adsorbed probe.

### [Post-hybridization washing solution and condition]

(i) 2 x SSC, 1% SDS; room temperature, 5 minutes, twice
(ii) 0.2 x SSC, 1% SDS; 40°C, 5 minutes, twice
(iii) 2 x SSC; room temperature, 5 minutes, once

### (4) Detection of hybridization

The slide glass after the aforementioned post-hybridization washing was blocked by immersing it in Buffer A (500 ml) containing 3% BSA at room temperature for 30 minutes. Then, it was immersed in 45 ml of a solution of streptavidin-alkaline phosphatase conjugate (prepared by diluting 2000 times a stock solution with Buffer A containing 3% BSA, Boehringer Mannheim) and allowed to react at room temperature for 30 minutes. Then, the slide glass was immersed in Buffer A (50 ml) and left at room temperature for 5 minutes. This procedure was repeated twice to remove the conjugate not bound to the biotin. Then, the slide glass was washed once with Buffer B (30 ml). Finally, it was immersed in a substrate solution (20 ml of Buffer B, 18 µl of BCIP (5-bromo-4-chloro-3-indolyl phosphate) solution. 36 µl of NBT (nitroblue tetrazolium) solution and left at room temperature for 3 hours to perform the color development reaction.

Eighteen pieces of the slide glass obtained as described above were placed (3 pieces along the longitudinal direction and 6 pieces along the transverse direction) on a scanner (GT8700F, EPSON), and their images were captured simultaneously.

The results of the analysis of the obtained images are shown in Table 1. The image analysis values shown in the table indicate average values for 5 spots of the same oligonucleotide immobilized on one DNA microarray. The values indicate contrast of signal with a numeral of 0 for the minimum value and a numeral of 100 for the maximum value in the scanned area.

Further, enlarged images of DNA-spotted areas of arbitrarily selected four pieces of the DNA microarrays are shown in Fig. 1.

**Table 1**

| Hybridization signals | | | | |
|---|---|---|---|---|
| | Detection of hybridization signals | | | |
| | DNA microarray 1 | DNA microarray 2 | DNA microarray 3 | DNA microarray 4 |
| SEQ ID NO:1 | 3 | 5 | 2 | 1 |
| SEQ ID NO:2 | 2 | 2 | 3 | 5 |
| SEQ ID NO:3 | 1 | 1 | 2 | 3 |
| SEQ ID NO:4 | 99 | 96 | 89 | 92 |
| DNA(-) | 1 | 1 | 1 | 1 |

| | DNA microarray 5 | DNA microarray 6 | DNA microarray 7 | DNA microarray 8 |
|---|---|---|---|---|
| SEQ ID NO:1 | 3 | 1 | 2 | 1 |
| SEQ ID NO:2 | 2 | 1 | 6 | 5 |
| SEQ ID NO:3 | 1 | 3 | 2 | 3 |
| SEQ ID NO:4 | 98 | 99 | 99 | 95 |
| DNA(-) | 1 | 1 | 1 | 1 |

| | DNA microarray 9 | DNA microarray 10 | DNA microarray 11 | DNA microarray 12 |
|---|---|---|---|---|
| SEQ ID NO:1 | 3 | 4 | 2 | 6 |
| SEQ ID NO:2 | 1 | 6 | 3 | 5 |
| SEQ ID NO:3 | 1 | 1 | 2 | 3 |
| SEQ ID NO:4 | 92 | 89 | 91 | 92 |
| DNA(-) | 1 | 1 | 1 | 1 |

| | DNA microarray 13 | DNA microarray 14 | DNA microarray 15 | DNA microarray 16 |
|---|---|---|---|---|
| SEQ ID NO:1 | 2 | 5 | 2 | 1 |
| SEQ ID NO:2 | 1 | 2 | 3 | 5 |
| SEQ ID NO:3 | 3 | 4 | 2 | 2 |
| SEQ ID NO:4 | 93 | 95 | 99 | 97 |
| DNA(-) | 1 | 1 | 1 | 1 |

| | DNA microarray 17 | DNA microarray 18 | | |
|---|---|---|---|---|
| SEQ ID NO:1 | 4 | 5 | | |
| SEQ ID NO:2 | 2 | 2 | | |
| SEQ ID NO:3 | 1 | 5 | | |
| SEQ ID NO:4 | 99 | 96 | | |
| DNA(-) | 1 | 1 | | |

From the results shown in Table 1, it can be seen that a hybridization signal was specifically obtained only from SEQ ID NO: 4 in each DNA microarray. Therefore, it can be seen that detection of a nucleic acid can be attained with an extremely definite signal according to the method for detecting a nucleic acid of the present invention. Furthermore, the obtained hybridization signals could be represented with numeric values, and thus results showing superior quantitative determination ability were obtained.

## Claims

1. A method for analyzing a biomolecule by localizing the biomolecule on a solid phase and detecting the biomolecule as a visible two-dimensional signal, wherein the signal is detected by capturing a two-dimensional image on the solid phase with use of a scanner comprising a light source for irradiating a light on the solid phase and an image sensor for receiving a reflected light from the solid phase and capturing the two-dimensional image on the solid phase by two-dimensionally scanning the solid phase, and analyzing obtained two-dimensional image data.

2. The method for analyzing a biomolecule according to claim 1, wherein the solid phase consists of a substrate made of a material selected from the group consisting of plastics, inorganic polymers, metals, naturally occurring polymers and ceramics.

3. The method for analyzing a biomolecule according to claim 1 or 2, wherein the biomolecule is selected from the group consisting of nucleic acids, proteins, enzymes, antigens, antibodies and saccharides.

4. The method for analyzing a biomolecule according to any one of claims 1 to 3, wherein the solid phase on which the biomolecule is localized is a DNA chip on which DNA is immobilized.

5. The method for analyzing a biomolecule according to any one of claims 1 to 4, wherein the biomolecule is visualized by binding, to the biomolecule, a labeling substance showing a transmittance, refractive index or reflectance different from that of the solid phase for a light irradiated from the light source or a substance labeled with the labeling substance and specifically binding to the biomolecule.

6. The method for analyzing a biomolecule according to any one of claims 1 to 5, wherein the two-dimensional image on the solid phase is captured while a spacer is placed between a portion of the substrate where the biomolecule is not immobilized and a capturing surface of the scanner.
